(19) Europäisches Patentamt
European Patent Office
Office européen des brevets

(11) Veröffentlichungsnummer: **0 441 221 A1**

(12) **EUROPÄISCHE PATENTANMELDUNG**

(21) Anmeldenummer: **91101108.8**

(22) Anmeldetag: **29.01.91**

(51) Int. Cl.$^5$: **C04B 41/48**, C09D 133/00

(30) Priorität: **09.02.90 DE 4003909**

(43) Veröffentlichungstag der Anmeldung: **14.08.91 Patentblatt 91/33**

(84) Benannte Vertragsstaaten: **BE CH DE DK ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Dotzauer, Bernhard, Dr.**
**Woehlerstrasse 12f**
**W-6701 Maxdorf(DE)**
Erfinder: **Wistuba, Eckehardt, Dr.**
**Im Obergarten 7**
**W-6702 Bad Duerkheim(DE)**
Erfinder: **Schwartz, Manfred, Dr.**
**Friesenstrasse 24**
**W-6700 Ludwigshafen(DE)**
Erfinder: **Petri, Rolf**
**Pierstrasse 10b**
**W-6710 Frankenthal(DE)**
Erfinder: **Bechert, Bertold**
**Trifelsstrasse 66**
**W-6718 Gruenstadt(DE)**

(54) **Verfahren zur Verhinderung von Ausblüherscheinungen auf mineralischen Substraten.**

(57) Die Erfindung betrifft ein Verfahren zur Verhinderung von Ausblüherscheinungen auf mineralischen Substraten durch Beschichten der Oberfläche der mineralischen Substrate mit wäßrigen Copolymerdispersionen und Trocknen der Beschichtung, dadurch gekennzeichnet, daß man für die Beschichtung ein Gemisch aus

A) einem Copolymer mit einer Glastemperatur von -25 bis +30 °C aus

a) 25 bis 80 Gew.-% mindestens eines Monomeren aus der Gruppe aus Acrylestern von bis zu 20 C-Atome enthaltenden, kein tertiäres H-Atom aufweisenden Alkanolen und Vinylestern von bis zu 12 C-Atome enthaltenden Carbonsäuren,

b) 0 bis 70 Gew.-% mindestens eines Monomeren aus der Gruppe aus vinylaromatischen Monomeren und Methacrylestern von bis zu 20 C-Atome enthaltenden, kein tertiäres H-Atom aufweisenden Alkanolen,

c) 0 bis 19 Gew.-% eines Acryl- oder Methacrylesters von 3 bis 20 C-Atome enthaltenden, ein tertiäres H-Atom aufweisenden Alkanolen, und

d) 0 bis 15 Gew.-%, wobei die Gew.-% jeweils auf die Summe der Monomeren bezogen ist, an weiteren, copolymerisierbaren olefinisch ungesättigten Verbindungen

und

B) 0,1 bis 5 Gew.-Teile, bezogen auf die Menge des Copolymerisats A als 100 Gew.-Teile, eines aromatischen Ketons

verwendet und die Beschichtung bei oder nach ihrer Trocknung mit ultraviolettem Licht bestrahlt und einen so geschützten Betonstein.

EP 0 441 221 A1

# VERFAHREN ZUR VERHINDERUNG VON AUSBLÜHERSCHEINUNGEN AUF MINERALISCHEN SUBSTRATEN

Die Erfindung betrifft ein Verfahren zur Verhinderung von Ausblüherscheinungen auf mineralischen Substraten, bei dem die mineralischen Substrate mit wäßrigen Copolymerdispersionen beschichtet werden.

Mineralische Substrate, wie Betonsteine, z.B. herkömmliche Ziegel oder insbesondere Betondachsteine, neigen unter dem Einfluß der Witterung zu Ausblüherscheinungen, die meist in Form weißer, pustelartiger Gebilde auftreten. Man hat daher in der Praxis schon seit langem versucht, derartige Ausblüherscheinungen durch das Aufbringen wasserfester Überzüge zurückzudrängen. Von besonderem Interesse sind dabei Beschichtungen, die aus Polymerdispersionen, insbesondere aus Polyacrylat-Dispersionen, erhalten werden (vgl. dazu die US-A 4,511,699 sowie die GB-A 1 411 268). Trotz der verhältnismäßig guten Beständigkeit dieser Polymeren gegen die Einflüsse des Wetters lassen jedoch die mit den bisherigen Copolymerbeschichtungen erzielten Ergebnisse noch zu wünschen übrig. Die Steine schmutzen stark an.

In der DE-A 3 827 975 wird ein Verfahren zur Verhinderung von Ausblüherscheinungen auf mineralischen Substraten beschrieben, bei dem Copolymerisate eingesetzt werden, die mindestens 20 Gew.-% eines (Meth)acrylesters von solchen Alkanolen enthalten, die ein tertiäres H-Atom aufweisen. In der DE-A 3 901 073 wird ein Betondachstein beschrieben, der mit einem Copolymerisat überzogen ist, das eine Organozinnverbindung einpolymerisiert enthält. In diesem Überzugsverfahren werden keine aromatischen Ketone verwendet.

Aufgabe der vorliegenden Erfindung ist es, durch verbesserte Copolymer-Beschichtungen Ausblüherscheinungen auf mineralischen Substraten, insbesondere auf Betondachziegeln für einen verlängerten Zeitraum zu gewährleisten und die Verschmutzungsneigung in erheblichem Maße zu reduzieren.

Es wurde gefunden, daß man Ausblüherscheinungen auf mineralischen Substraten durch Beschichten ihrer Oberfläche mit wäßrigen Copolymerdispersionen und Trocknen der Beschichtung besonders wirkungsvoll verhindern kann, wenn man für die Beschichtung ein Gemisch aus

A) einem Copolymer mit einer Glastemperatur von -25 bis +30 °C aus

a) 25 bis 80 Gew.-% mindestens eines Monomeren aus der Gruppe aus Acrylestern von bis zu 20 C-Atome enthaltenden, kein tertiäres H-Atom aufweisenden Alkanolen und Vinylestern von bis zu 12 C-Atome enthaltenden Carbonsäuren,

b) 0 bis 70 Gew.-% mindestens eines Monomeren aus der Gruppe aus vinylaromatischen Monomeren und Methacrylestern von bis zu 20 C-Atome enthaltenden, kein tertiäres H-Atom aufweisenden Alkanolen,

c) 0 bis 19 Gew.-% eines Acryl- oder Methacrylesters von 3 bis 20 C-Atome enthaltenden, ein tertiäres H-Atom aufweisenden Alkanolen, und

d) 0 bis 15 Gew.-%, wobei die Gew.-% jeweils auf die Summe der Monomeren bezogen ist, an weiteren, copolymerisierbaren olefinische ungesättigten Verbindungen

und

B) 0,1 bis 5 Gew.-Teile, bezogen auf die Menge des Copolymerisats A als 100 Gew.-Teile, eines aromatischen Ketons

verwendet und die Beschichtung bei oder nach ihrer Trocknung mit ultraviolettem Licht bestrahlt.

Weiterhin wurde ein Betonstein gefunden, der durch dieses Verfahren gegen Ausblüherscheinungen geschützt ist.

Wäßrige Copolymerdispersionen mit einer Glastemperatur von -25 bis +30 °C, die die Monomeren a bis d einpolymerisiert enthalten, und ihre Herstellung sind an sich bekannt. Copolymere ohne andere Monomere sind bevorzugt.

Die Monomeren a werden bevorzugt in Mengen von 40 bis 70, insbesondere von 44 bis 65 Gew.-%, bezogen auf die Summe der Monomeren, eingesetzt.

Es kann sich dabei um Vinylpropionat, Vinyl-n-butyrat, Vinyllaurat, t-Butylacrylat, n-Hexylacrylat, n-Octylacrylat, n-Decylacrylat, n-Laurylacrylat, n-Stearylacrylat und bevorzugt Methylacrylat, Ethylacrylat, n-Propylacrylat und insbesondere n-Butylacrylat handeln. Es können auch Gemische mindestens zweier dieser Verbindungen als Monomeres a eingesetzt werden.

Die Monomeren b werden bevorzugt in Mengen von 20 bis 55, insbesondere von 30 bis 55 Gew.%, bezogen auf die Summe der Monomeren, eingesetzt. Es kann sich handeln um Methylmethacrylat, Ethylmethacrylat, n-Propylmethacrylat, n-Butylmethacrylat, t-Butylmethacrylat, n-Hexylmethacrylat, n-Octylmethacrylat, n-Decylmethacrylat, n-Stearylmethacrylat und bevorzugt um α-Methylstyrol, Styrol, das am Kern durch $C_1$-$C_4$-Alkylgruppen, Chlor oder Brom substituiert ist, wie p-Methylstyrol, p-Chlorstyrol oder p-Bromstyrol, und insbesondere um Styrol selbst handeln. Es können auch Gemische mindestens zweier dieser Verbindungen als Monomeres b eingesetzt werden.

Bevorzugte Mengen der Monomeren o sind 0 bis 10 Gew.%, bezogen auf die Summe der Monomeren. Gute Ergebnisse werden erzielt, wenn das Copolymer A keine Monomeren c enthält. Als Monomere c sind bevorzugt 2-Ethylhexylacrylat, 2-Ethylhexylmethacrylat, Isobutylacrylat oder -methacrylat einpolymerisiert. Als Monomere c sind auch Isopropylacrylat und -methacrylat, Isooctylacrylat und -methacrylat, Isodecylacrylat und -methacrylat, Isododecylacrylat und -methacrylat sowie ferner Isostearylacrylat und -methacrylat geeignet, wobei Acryl- und Methacrylsäureester von 6 bis 12 C-Atome enthaltenden, ein tertiäres H-Atom aufweisenden Alkanolen der genannten Art allgemein bevorzugt werden. Es können auch Gemische mindestens zweier dieser Verbindungen als Monomer c eingesetzt werden.

Monomere d werden in Mengen von 0 bis 10, insbesondere 1 bis 5 Gew.%, bezogen auf die Summe der Monomeren, bevorzugt. Es handelt sich um solche Monomere, die mit Monomeren a copolymerisierbar sind. Es kann sich dabei um Acrylnitril, Methacrylnitril, $\alpha$-Olefine wie Ethylen, Propen und Isobuten, Vinylchlorid, Vinylidenchlorid, Acrylamid, Methacrylamid, N-Methyl-acrylamid und -methacrylamid, N-Butylacrylamid und -methacrylamid, N-Ethyl-acrylamid, Maleinsäure, Fumarsäure, Maleinsäuremonoamid und -diamid, Furmarsäureamide, Tetrahydrofurfuryl-acrylat und -methacrylate, Alkoxyalkylacrylate wie 3-Methoxy-n-butyl-acrylat und -methacrylat, 2- und 3-n-Butoxymethyl-n-butylacrylat und -methacrylat, 2-Ethoxy-n-propyl-acrylat und -methacrylat, 3-Ethoxyhexylacrylat, 4-n-Propoxy-n-hexyl-methacrylat, 5-Methoxy-n-hexylacrylat und -methacrylat und 2-Methyl-4-methoxyhexylacrylat und -methacrylat und bevorzugt um Tetrahydrofurfuryl-3-acrylat und -methacrylat sowie 2- und 3-Methoxy-n-butylacrylat und -methacrylat, Acrylsäure, Methacrylsäure und Itaconsäure handeln.

Erfindungswesentlich ist es, daß das Copolymer A eine Glastemperatur von -25 bis +30 °C, insbesondere von -12 bis +22 °C, aufweist.

Die Glastemperatur läßt sich nach üblichen Methoden, z.B. aus der Messung des E-Moduls im Kriechversuch als Funktion der Temperatur (oder auch mit der Differentialthermoanalyse (DTA)) bestimmen (s. dazu A. Zosel, Farbe und Lack 82 (1976), 125-134).

Die wäßrigen Dispersionen des Copolymerisates A haben üblicherweise einen Copolymergehalt von 10 bis 65, bevorzugt 20 bis 55 Gew.%, meßbar nach DIN 53 189. Sie können in an sich üblicher Weise unter Verwendung der üblichen radikalbildenden Polymerisationsinitiatoren sowie von üblichen anionischen und gegebenenfalls zusätzlichen nichtionischen Dispergierhilfsmitteln hergestellt sein. Im allgemeinen werden für ihre Herstellung Persulfate, wie Ammoniumpersulfat und Kaliumpersulfat, eingesetzt. Als anionische Emulgatoren werden häufig in Mengen von vorzugsweise 0,5 bis 2,5 Gew.%, bezogen auf die Monomeren, sulfatierte Alkoxylierungsprodukte von meist 12 bis 20 C-Atome enthaltenden, gegebenenfalls monoolefinisch ungesättigten Alkanolen, wie Laurylalkohol, Stearylalkohol, Oleylalkohol oder Spermölalkohol oder 12 bis 20 C-Atome enthaltenden gegebenenfalls monoolefinisch ungesättigten Alkylaminen oder meist 8 bis 12 C-Atome in den Alkylgruppen enthaltenden Alkylphenolen, wie n-Octylphenol, n-Nonylphenol, iso-Nonylphenol oder n-Dodecylphenol eingesetzt, wobei für deren Alkoxylierung im allgemeinen Ethylenoxid und/oder Propylenoxid verwendet sein kann und der Alkoxylierungsgrad im allgemeinen 5 bis 80, vorzugsweise 10 bis 30 Mol Alkylenoxid, vorzugsweise Ethylenoxid, je Mol Fettalkohol, Fettamin oder Alkylphenol beträgt. Derartige Alkoxylierungsprodukte werden meist in Form ihrer wasserlöslichen Alkali- oder Ammoniumsalze eingesetzt. Zusätzlich können auch entsprechende nichtsulfatierte alkoxylierte Fettalkohole, Fettamine oder Alkylphenole eingesetzt sein. Die Emulsionspolymerisation zur Herstellung der Copolymer-Dispersionen kann unter den üblichen Temperaturbedingungen von meist 40 bis 90 °C, vorzugsweise nach den Monomeren- oder Emulsions-Zulaufverfahren durchgeführt sein.

Die aromatischen Ketone werden in den Gemischen im allgemeinen in Mengen von 0,1 bis 5 Gew.-Teilen, bezogen auf die Menge des Copolymerisates A als 100 Gew.-Teile, vorzugsweise in Mengen von 0,2 bis 2,5 Gew.-Teilen, eingesetzt. Besonders bevorzugt sind Benzophenon und Benzophenonderivate wie 3,3'-Dimethyl-4-methoxybenzophenon, 3- und 4-Hydroxybenzophenon, Benzophenon-2-carbonsäure, Benzophenon-3-carbonsäure, Benzophenon-4-carbonsäure, 3,3'-4,4'-Benzophenontetracarbonsäure und 3,3',4,4'-Benzophenontetracarbonsäuredianhydrid, 3,3',4,4'-Tetra-(tert.-butylperoxicarbonyl)-benzophenon sowie 2-, 3- und 4-Phenylbenzophenon, 2-, 3- und 4-Alkylbenzophenone mit 1 bis 10 C-Atomen in den Alkylresten, wie 2-, 3- und 4-Methylbenzophenon, 2-, 3-, 4-Nonylbenzophenon, Dialkylbenzophenone wie 4,4'-Diisopropylbenzophenon sowie auch olefinisch ungesättigte sowie wasserlösliche Benzophenonderivate. Geeignete aromatische Ketone bzw. Benzophenonderivate sind ferner 2-Acetonaphthon, 4-Aminobenzophenon und 4,4'-Tetramethylaminobenzophenon. Gute Erfolge werden mit einer Verbindung der allgemeinen Formel

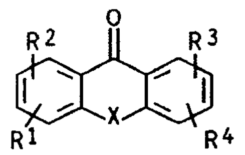

I

erzielt, in der X Sauerstoff oder bevorzugt Schwefel ist. $R^1$, $R^2$, $R^3$ und $R^4$ bedeuten unabhängig voneinander -H, -OH, $C_1$-$C_4$-Alkyl oder Halogen. Beispiele sind 3-Hydroxythioxanthon, 4-Hydroxythioxanthon, 3-Ethylthioxanthon, 4-Ethylthioxanthon, 3-Bromthioxanthon, 4-Bromthioxanthon, Xanthon und insbesondere Thioxanthon selbst.

Derartige aromatische Ketone werden den Copolymerdispersionen im allgemeinen in Form einer feinteiligen Suspension oder in manchen Fällen auch in reiner Form, gegebenenfalls bei erhöhter Temperatur, meist unter Einrühren zugesetzt.

Zusätzlich können den Dispersionen auch Pigmente und Pigmentzubereitungen, wie Titanoxide, Eisenoxide und Farbpigmentzubereitungen in an sich üblichen Mengen zugefügt werden. Um die Wirkung der UV-Bestrahlung zu verbessern, kann man die bekannten Beschleuniger für Photoreaktionen von aromatischen Ketonen wie Benzophenon zusetzen. Beispielhaft genannt seien aromatische Amine wie Michlers Keton.

Bei dem neuen Verfahren können die Gemische aus den Copolymer-Dispersionen und den aromatischen Ketonen, die gegebenenfalls Füllstoffe enthalten, auf die mineralischen Substrate in an sich üblicher Weise aufgebracht werden. Die Mengen an Pigmenten und/oder Füllstoffen liegt im allgemeinen zwischen 50 und 450 Gew.-Teilen, bezogen auf das Copolymer A als 100 Gew.-Teile. Als mineralische Substrate kommen z.B. geformte Gebilde aus Asbestzement, Beton und Gasbeton, z.B. Platten, Rohre und insbesondere Dachziegel in Frage, wobei die Aufträge auch auf nicht ausgehärtete Produkte dieser Art, insbesondere Betondachziegel aufgebracht werden können. Der Auftrag erfolgt in an sich üblicher Weise durch Spritzen, Spachteln, Rakeln, Rollen oder Gießen, wobei meist Auftragsmengen von 50 bis 400, insbesondere 100 bis 250 $g/m^2$, angewandt werden. Von besonderem Interesse ist das Aufbringen derartiger Beschichtungen auf nicht abgebundene, sog. "grüne" Betondachsteine. Das Trocknen des oder gegebenenfalls der Aufträge kann in an sich üblicher Weise, gegebenenfalls bei Raumtemperatur und wenig erhöhter Temperatur im allgemeinen bei Temperaturen von 20 bis 100 °C, vorzugsweise von 50 bis 80 °C, durchgeführt werden, wobei z.B. Heizstrahler oder Wärmeluftumwälzvorrichtungen eingesetzt werden können. Dabei oder danach können die beschichteten mineralischen Substrate zur Vernetzung mit Vorteil gleichzeitig mit ultraviolettem Licht bestrahlt werden, wobei eine Inertgasatmosphäre nicht erforderlich ist. Verwendet werden können hierfür übliche UV-Strahler, z.B. Quecksilberdampf-Niederdruck-, -mitteldruck- oder -hochdrucklampen, deren Leistungen z.B. 80 W/cm bis 160 W/cm oder mehr betragen können. Auch mehrere derartige UV-Strahlungsquellen können mit Vorteil eingesetzt werden.

Eine andere deutlich kostengünstigere Methode besteht darin, die ohne UV-Bestrahlung wie üblich getrockneten beschichteten Substrate dem Sonnenlicht oder dem diffusen Tageslicht auszusetzen, was z.B. durch mehrtägige Lagerung, üblicherweise 2 bis 7 Tage, im Freien geschehen kann. Der UV-Anteil des Tageslichtes reicht dabei im allgemeinen aus. Die übliche Lagerdauer für solche Substrate wie Betonsteine von ca. einer Woche und mehr muß daher nicht verlängert werden.

Man erhält dabei auf den mineralischen Substraten gut haftende Überzüge, die eine vorzügliche Alterungsbeständigkeit und besonders lange Lebensdauer aufweisen. Beim Einsatz der nach dem neuen Verfahren beschichteten mineralischen Substrate, insbesondere von beschichteten Beton-Dachsteinen, wird die Oberfläche der Beschichtung im Laufe der Zeit durch die Bewitterung angegriffen, doch werden dann die angegriffenen Stellen, an denen nunmehr vorher nicht zugängliche weitere aromatische Ketone freigelegt werden, durch den UV-Anteil der Sonnenbestrahlung erneut vernetzt, wodurch die darunter liegenden Auftragsschichten wirksam geschützt werden. Durch diese "Selbstreparatur" weisen die erfindungsgemäß behandelten mineralischen Substrate, d.h. die Beschichtungen, eine wesentlich höhere Lebensdauer auf, als die mit herkömmlichen Mitteln hergestellten Beschichtungen. Die Verschmutzungsneigung ist deutlich geringer als bei herkömmlichen Beschichtungen.

Die in den folgenden Beispielen angegebenen Teile und Prozente beziehen sich auf das Gewicht.

Beispiel 1

In an sich üblicher Weise wird nach dem Emulsionszulaufverfahren eine 50 %ige wäßrige Dispersion eines Mischpolymerisates aus 55 Teilen n-Butylacrylat, 35 Teilen Styrol und 10 Teilen 2-Ethylhexylacrylat

hergestellt, wobei 0,4 %, bezogen auf die Monomeren, Natriumperoxodisulfat als Polymerisationsinitiator und 1,5 %, bezogen auf die Monomeren, eines handelsüblichen Emulgators auf Basis eines sulfatierten Nonylphenols, das mit im Mittel 25 Ethylenoxideinheiten ethoxiliert ist, eingesetzt werden. Die Polymerisation wird bei 80° C durchgeführt. Das erhaltene Copolymer hat eine TG von -10° C.

In gleicher Weise wurden 50 %ige wäßrige Dispersionen eines Copolymerisats aus den in Tabelle 1 angegebenen Monomeren hergestellt. Die Glastemperaturen sind ebenfalls in der Tabelle angegeben.

Tabelle 1

| Beispiel | Monomere (Teile) | TG [°C] |
|---|---|---|
| 2 | 60 n-Butylacrylat<br>35 Styrol<br>5 iso-Butylacrylat | - 5 |
| 3 | 60 n-Butylacrylat<br>40 Styrol | 3 |
| 4 | 50 n-Butylacrylat<br>50 Styrol | 20 |
| 5 | 78 n-Butylacrylat<br>15 Acrylnitril<br>7 Styrol | -20 |

A) Beschichtungstest auf Betondachsteinen

In die Copolymer-Dispersionen werden bei 60° C 0,5%, bezogen auf das Copolymer, Benzophenon eingerührt. Das Gemisch wird auf 40 % Copolymer-Gehalt mit Wasser verdünnt und 0,5 % eines handelsüblichen Entschäumers zugesetzt.

Mit dem erhaltenen Beschichtungsmittel werden "grüne" Betondachsteine mit einer Spritzpistole (etwa 2 bar Spritzdruck) gleichmäßig besprüht, derart, daß der Auftrag 120 g/m$^2$ beträgt. Die "grünen" Betondachsteine werden als Flachsteine der Abmessungen 30 • 20 • 1,8 cm durch Extrusion eines Mörtels aus Sand (Korngröße bis zu 0,3 mm) und Zement (Verhältnis 1:3) und einem Wasser/Zement-Faktor von 0,4 hergestellt, der mit 3 % Eisenoxidpigment schwarz eingefärbt ist. Zur Härtung werden die beschichteten Betondachsteine im Klimaschrank 30 Minuten bei 50 % relativer Luftfeuchtigkeit getrocknet, daraufhin 10 Minuten mit einer 10 W-UV-Lampe bestrahlt und sodann 2,5 Stunden bei etwa 50 % und dann 3 Stunden bei etwa 95 % relativer Luftfeuchtigkeit getrocknet. Man lagert dann 24 Stunden bei Raumtemperatur und setzt die beschichtete Seite des Steins 24 Stunden lang Wasserdampf von 60° C aus. Nach 7-tägiger Trocknung bei Raumtemperatur wird die Beschichtung visuell beurteilt. Die Ergebnisse sind in der Tabelle 2 zusammengestellt.

Tabelle 2

| Beispiel | Aussehen der getrockneten Beschichtungen vor | nach der 24-stündigen Wasserdampfbehandlung |
|---|---|---|
| 1 | gleichmäßig, glänzend | geringer Glanzverlust, kein Tack, praktisch keine Ausblühungen |
| 2 | gleichmäßig, glänzend | geringer Glanzverlust, kein Tack, keine Ausblühungen |
| 3 | gleichmäßig, glänzend und gute Farbwiedergabe | praktisch keine Ausblühungen, schwacher Tack |
| 4 | gleichmäßig, glänzend und gute Farbwiedergabe | keine Veränderung, keine Ausblühungen |
| 5 | gleichmäßig, glänzend und gute Farbwiedergabe | keine Veränderung, keine Ausblühungen |

B) Test der Verschmutzungsneigung

In die Copolymer-Dispersionen werden bei 60° C 0,5 %, bezogen auf das Copolymer, Benzophenon eingerührt.

Die jeweilige Dispersion wird als 200 µ starker Film auf eine Glasplatte aufgezogen.

Danach erfolgt eine Trocknung von einer Minute bei 70° C. Der Film wird danach ca. 24 h bei Raumtemperatur gelagert. Anschließend wird der Film 10 Minuten mit einer 10-W-UV-Lampe bestrahlt.

1. Verschmutzung (Stufe 1)

Am oberen Ende des Filmes wird ca. 1 g pulverförmige Aktivkohle mit einem Metallsieb als runde Verschmutzung mit einem Durchmesser von ca. 5 cm aufgestreut. Nach einer Ruhezeit von 1 h wird die Aktivkohle seitlich abgeklopft und kurz mit Wasser abgespült.

2. Verschmutzung (Stufe 2)

Die Glasplatten werden mit dem noch unverschmutzten Filmende 15 Minuten in Wasser gestellt. Nach Ablauf dieser Zeit wird der Film bei Raumtemperatur getrocknet. Es erfolgt eine erneute Verschmutzung wie oben beschrieben auf dem gewässerten Teil des Filmes.

Beurteilung:

Die Beurteilung erfolgt nach Trocknung der Filme.

0 keine Verschmutzung
1 kaum sichtbare Verschmutzung
2 geringe Verschmutzung
3 leichte Verschmutzung
4 mittlere Verschmutzung
5 starke Verschmutzung
6 sehr starke Verschmutzung.

Die Ergebnisse zeigt Tabelle 3:

Tabelle 3

| Beispiel | Note (Stufe 1) | Note (Stufe 2) |
|---|---|---|
| 1 | 1-2 | 1-2 |
| 2 | 1-2 | 1-2 |
| 3 | 1-2 | 1-2 |
| 4 | 1- | 1-2 |
| 5 | 1- | 1-2 |

**Patentansprüche**

1. Verfahren zur Verhinderung von Ausblüherscheinungen auf mineralischen Substraten durch Beschichten der Oberfläche der mineralischen Substrate mit wäßrigen Copolymerdispersionen und Trocknen der Beschichtung, dadurch gekennzeichnet, daß man für die Beschichtung ein Gemisch aus
   A) einem Copolymer mit einer Glastemperatur von -25 bis +30 ° C aus
      a) 25 bis 80 Gew.-% mindestens eines Monomeren aus der Gruppe aus Acrylestern von bis zu 20 C-Atome enthaltenden, kein tertiäres H-Atom aufweisenden Alkanolen und Vinylestern von bis zu 12 C-Atome enthaltenden Carbonsäuren,
      b) 0 bis 70 Gew.-% mindestens eines Monomeren aus der Gruppe aus vinylaromatischen Monomeren und Methacrylestern von bis zu 20 C-Atome enthaltenden, kein tertiäres H-Atom aufweisenden Alkanolen,
      c) 0 bis 19 Gew.-% eines Acryl- oder Methacrylesters von 3 bis 20 C-Atome enthaltenden, ein tertiäres H-Atom aufweisenden Alkanolen, und
      d) 0 bis 15 Gew.-%, wobei die Gew.-% jeweils auf die Summe der Monomeren bezogen ist, an weiteren, copolymerisierbaren olefinisch ungesättigten Verbindungen
   und
   B) 0,1 bis 5 Gew.-Teile, bezogen auf die Menge des Copolymerisats A als 100 Gew.-Teile, eines aromatischen Ketons
   verwendet und die Beschichtung bei oder nach ihrer Trocknung mit ultraviolettem Licht bestrahlt.

2. Verfahren nach Anspruch 1, dadurch gekennzeichnet, daß das aromatische Keton B eine Verbindung der allgemeinen Formel

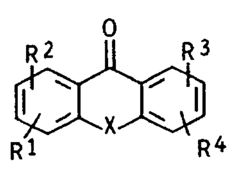

I

ist, in der X Sauerstoff oder Schwefel und $R^1$, $R^2$, $R^3$ und $R^4$ unabhängig voneinander -H, -OH, $C_1$-$C_4$-Alkyl oder Halogen bedeuten.

3. Verfahren nach Anspruch 1, dadurch gekennzeichnet, daß das zur Beschichtung eingesetzte Gemisch als Komponente (B) 0,2 bis 2,5 Gew.-Teile, bezogen auf die Menge des Copolymerisats A als 100 Gew.-Teile, Benzophenon, eines Benzophenonderivates oder deren Gemische enthält.

4. Verfahren nach den Ansprüchen 1 bis 3, dadurch gekennzeichnet, daß das Copolymer eine Glastemperatur von -12 bis +22 ° C aufweist.

5. Verfahren nach den Ansprüchen 1 bis 4, dadurch gekennzeichnet, daß ein Copolymer aus

40 bis 70 Gew.% a,
20 bis 55 Gew.% b,
0 bis 10 Gew.% c und
0 bis 10 Gew.% d

verwendet wird.

6. Verfahren nach den Ansprüchen 1 bis 5, dadurch gekennzeichnet, daß das Monomere a ausgewählt ist aus Methylacrylat, Ethylacrylat, n-Propylacrylat und n-Butylacrylat oder ein Gemisch mindestens zweier der genannten Monomeren.

7. Verfahren nach den Ansprüchen 1 bis 6, dadurch gekennzeichnet, daß das Monomere b ausgewählt ist aus Styrol, am Kern durch Alkylgruppen mit bis zu 4 C-Atomen, Chlor oder Brom substituiertem Styrol, $\alpha$-Methylstyrol oder ein Gemisch mindestens zweier der genannten Monomeren.

8. Verfahren nach den Ansprüchen 1 bis 7, dadurch gekennzeichnet, daß das Monomere c iso-Butylacrylat, iso-Butylmethacrylat, 2-Ethylhexylarcylat, 2-Ethylhexylmethacrylat oder ein Gemisch mindestens zweier der genannten Monomeren ist.

9. Betonstein, der gegen Ausblüherscheinungen durch ein Verfahren gemäß den Ansprüchen 1 bis 8 geschützt ist.

Europäisches Patentamt

# EUROPÄISCHER RECHERCHENBERICHT

Nummer der Anmeldung: EP 91101108.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,D, A | DE - A1 - 3 827 975 (BASF AG) * Gesamt * -- | 1 | C 04 B 41/48<br>C 09 D 133/00 |
| A | DE - A - 2 233 942 (MONIER RESEARCH & DEVELOPMENT PTY. LTD. et al.) * Gesamt * -- | 1 | |
| A | FR - A - 1 222 066 (ROHM & HAAS COMPANY) * Gesamt * ---- | 1 | |

RECHERCHIERTE SACHGEBIETE (Int. Cl.4)

C 04 B
C 09 D
B 05 D

Der vorliegende Recherchenbericht wurde für alle Patentansprüche erstellt.

| Recherchenort | Abschlußdatum der Recherche | Prüfer |
|---|---|---|
| WIEN | 10-04-1991 | BECK |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82